# EUROPÄISCHE PATENTSCHRIFT

(11) **EP 2 730 800 B1**
(45) Veröffentlichungstag und Bekanntmachung des Hinweises auf die Patenterteilung: **26.08.2015**
(21) Anmeldenummer: 12007666.6
(22) Anmeldetag: 12.11.2012
(51) Int. Cl.: F16F 13/26

(54) **Hydrolager**
Hydraulic support
Support hydraulique

(43) Veröffentlichungstag der Anmeldung: 14.05.2014
(73) Patentinhaber: TrelleborgVibracoustic GmbH, 64293 Darmstadt (DE)
(72) Erfinder: Hirsch, Volker, Dr., 67346 Speyer (DE); Barro-Bejarano, Lucio, 69199 Mannheim (DE); Schillinger, Michael, 69469 Weinheim (DE)
(74) Vertreter: Flügel Preissner Kastel Schober

(56) Entgegenhaltungen:
- EP-A2- 1 277 986
- DE-C1- 19 725 771
- DE-C1- 19 816 763
- US-A1- 2005 258 581
- US-B1- 6 311 964

## Beschreibung

### Technisches Gebiet

Die Erfindung betrifft ein Hydrolager, umfassend ein Traglager und ein Auflager, die durch einen im Wesentlichen hohlkegelförmig ausgebildeten Federkörper aus gummielastischem Werkstoff aufeinander abgestützt sind und einen Arbeitsraum und einen Ausgleichsraum begrenzen, die in Richtung der betriebsbedingt eingeleiteten Schwingungen benachbart zueinander angeordnet sind, wobei der Arbeitsraum und der Ausgleichsraum mit Dämpfungsflüssigkeit gefüllt und auf ihren einander axial zugewandten Seiten durch eine Trennwand räumlich voneinander getrennt und flüssigkeitsleitend miteinander verbunden sind, wobei die Trennwand eine durch einen Verschlusskörper verschließbare Durchbrechung aufweist, wobei der Verschlusskörper durch ein Stellglied einer Stellvorrichtung bedarfsweise in Offen- oder Geschlossenstellung bringbar ist, wobei das Stellglied durch eine hohlkegelförmig und einstückig ausgebildete Schaltmembran aus gummielastischem Werkstoff gebildet ist, wobei auf der der Trennwand axial abgewandten Seite der Schaltmembran eine Druckkammer mit einem pneumatischen Anschluss zur Betätigung der Schaltmembran durch Differenzdruck angeordnet ist, wobei die Schaltmembran einen der Trennwand axial zugewandten ebenen Zentralbereich aufweist, der von einem kreisring-und hohlkegelförmigen Randbereich außenumfangsseitig umschlossen ist und wobei der Randbereich axial entgegen der Richtung der Trennwand trichterförmig sich erweiternd ausgebildet ist.

### Stand der Technik

Aus der DE 43 30 560 C1 ist ein Hydrolager bekannt, dessen Stellvorrichtung durch Differenzdruck betätigbar ist und eine Rückstellfeder umfasst, die als Schraubendruckfeder ausgebildet ist und aus einem metallischen Werkstoff besteht. Diese Rückstellfeder ist auf der der Trennwand axial abgewandten Seite des Verschlusskörpers in einer Druckkammer angeordnet, mit einem pneumatischen Anschluss, zur Bewegung des Verschlusskörpers in Offen- oder Geschlossenstellung. Um den Verschlusskörper in Offenstellung zu bringen, wird der Verschlusskörper mit Unterdruck beaufschlagt, wobei der Unterdruck den Verschlusskörper gegen die Kraft der Rückstellfeder in Offenstellung hält. Soll demgegenüber die Durchbrechung in der Trennwand durch den Verschlusskörper verschlossen werden, wird die Unterdruckbeaufschlagung des Verschlusskörpers abgeschaltet und die Rückstellfeder drückt den Verschlusskörper dichtend gegen die Durchbrechung.

Ferner gehen aus DE 197 25 771 C1, DE 198 16 763 C1, EP 1 277 986 A2, US 6,311,964 B1 und US 2005/258581 A1 Hydrolager mit einer Schaltmembran hervor, die zum Schließen einer in einer Trennwand eingebrachten Durchbrechung mit einer Druckfeder verbunden sind. Durch Beaufschlagung der Schaltmembran mit Unterdruck wird eine Kraft, die entgegen der Federkraft wirkt, erzeugt, so dass die Durchbrechung geöffnet wird.

### Darstellung der Erfindung

Der Erfindung liegt die Aufgabe zugrunde, ein Hydrolager der eingangs genannten Art derart weiter zu entwickeln, dass es einen einfachen und teilearmen Aufbau hat und dadurch einfach und kostengünstig herstellbar ist. Durch den einfachen und teilearmen Aufbau soll eine gute Betriebssicherheit gewährleistet sein, mit gleichbleibend guten Gebrauchseigenschaften während einer langen Gebrauchsdauer.

Diese Aufgabe wird erfindungsgemäß mit den Merkmalen von Anspruch 1 gelöst. Auf vorteilhafte Ausgestaltungen nehmen die Unteransprüche Bezug.

Zur Lösung der Aufgabe ist es vorgesehen, dass der Randbereich als Druckfeder wirkt und den Verschlusskörper strömungsdicht an der Durchbrechung hält.

Hierbei ist von Vorteil, dass nur ein Teil des Hydrolagers, nämlich das als Schaltmembran ausgebildete Stellglied, sowohl für eine Bewegung des Verschlusskörpers in Offen- oder Geschlossenstellung als auch für eine Abdichtung der Druckkammer gegenüber der Umgebung sorgt. Beide Funktionen werden durch die einstückig ausgebildete gummielastische Schaltmembran bewirkt. Die Schaltmembran weist einen der Trennwand axial zugewandten ebenen Zentralbereich auf, der von einem kreisring- und hohlkegelförmigen Randbereich außenumfangsseitig umschlossen ist, wobei der Randbereich axial entgegen der Richtung der Trennwand trichterförmig sich erweiternd ausgebildet ist. Die Schaltmembran ist dadurch tellerfederähnlich ausgebildet. Der Randbereich wirkt als Druckfeder und hält den Verschlusskörper bedarfsweise strömungsdicht an der Durchbrechung. Zum Öffnen der Durchbrechung wird die Druckkammer mit einem relativen Unterdruck beaufschlagt, der gegen die Federkraft des Randbereichs der Schaltmembran wirkt. Dadurch wird der Randbereich gestaucht und der Zentralbereich der Schaltmembran von der Durchbrechung in der Trennwand wegbewegt; der Verschlusskörper gibt dadurch die Durchbrechung frei.

Bevorzugt weist der Zentralbereich eine größere Materialdicke als der Randbereich auf. Die relativ zum Randbereich massivere Struktur des Zentralbereichs hat den Vorteil, dass sich der Zentralbereich dadurch während der bestimmungsgemäßen Verwendung des Hydrolagers praktisch nicht nennenswert verformt. Die Durchbrechung des Hydrolagers lässt sich dadurch besonders exakt schalten. Das Hydrolager weist folglich gute Gebrauchseigenschaften, insbesondere eine präzise Umschaltung des Hydrolagers, auf.

Der Zentralbereich kann zumindest eine Ausnehmung aufweisen, die axial in Richtung der Trennwand offen ist. Unter Berücksichtigung einer weiterhin ausreichenden Formstabilität des Zentralbereichs können durch zumindest eine Ausnehmung Material, aus dem die Schaltmembran besteht und Gewicht eingespart werden. Außerdem ermöglicht die zumindest eine Ausnehmung einen besseren Wärmeeintrag bei der Vulkanisation der Schaltmembran und damit kürzere Heizzeiten während des Herstellungsvorgangs und deshalb eine weitere Reduzierung der Herstellungskosten des Hydrolagers.
Zumindest eine Ausnehmung, die axial auf der der Trennwand abgewandten Seite offen ist, ist prinzipiell ebenfalls möglich.

Der Ausgleichsraum kann auf der der Trennwand axial abgewandten Seite durch eine rollbalgförmig ausgebildete, im Wesentlichen drucklos volumenaufnehmende Abschlussmembran begrenzt sein. Dämpfungsflüssigkeit, die während der bestimmungsgemäßen Verwendung des Hydrolagers vom Arbeitsraum durch die Trennwand hindurch in den Ausgleichsraum verlagert wird, wird im Ausgleichsraum aufgenommen, ohne dass sich dadurch der Druck im. Inneren des Hydrolagers nennenswert erhöht und dadurch zu einer unerwünschten Verhärtung des Hydrolagers führt.

Die Abschlussmembran besteht bevorzugt aus einem gummielastischen Werkstoff. Solche Abschlussmembranen weisen gute Gebrauchseigenschaften und eine gute Dauerhaltbarkeit auf.

Das Auflager kann einen im Wesentlichen topfförmigen Deckel umfassen, der auf der der Trennwand axial abgewandten Seite der Abschlussmembran angeordnet ist und die Druckkammer auf der der Schaltmembran axial abgewandten Seite begrenzt. Der Deckel schützt sowohl die Druckkammer als auch die Abschlussmembran des Ausgleichsraums vor äußeren Einflüssen.

Der pneumatische Anschluss ist bevorzugt im Deckel angeordnet. Der Deckel ist ortsfest zum Auflager angeordnet, so dass sich dadurch der pneumatische Anschluss besonders einfach mit einer Leitung verbinden lässt, durch die die Druckkammer mit Differenzdruck beaufschlagbar ist.

Die Schaltmembran und die Abschlussmembran können bevorzugt eine vormontierbare Einheit bilden und kraft- und/oder formschlüssig oder stoffschlüssig miteinander verbunden sein. Durch eine solche Ausgestaltung wird die Herstellung und Montage des Hydrolagers vereinfacht und die Gefahr von Montagefehlern ist auf ein Minimum reduziert.

Generell bestehen mehrere Möglichkeiten, wie Schaltmembran und Abschlussmembran ausgebildet und einander zugeordnet sein können.

Gemäß einer ersten Ausgestaltung kann es vorgesehen sein, dass sich die Schaltmembran und die Abschlussmembran auf ihren einander axial zugewandten Seiten nur bei verschlossener Durchbrechung ungehaftet anliegend berühren. Ansonsten sind die Schaltmembran und die Abschlussmembran mit axialem Abstand lose zueinander benachbart angeordnet. In einem solchen Fall ist der Verschlusskörper zum bedarfsweise Öffnen oder Verschließen der Durchbrechung durch die Abschlussmembran selbst gebildet, die mittels des Zentralbereichs der Schaltmembran zum Verschließen der Durchbrechung dichtend an die Trennwand anlegbar ist. Eine gehaftete Verbindung zwischen der Schaltmembran und der Abschlussmembran, z. B. durch eine Verknüpfung, kann entfallen, wenn die Abschlussmembran durch eine statische Vorlast des Hydrolagers und eine ausreichend hohe Füllmenge an Dämpfungsflüssigkeit einen ausreichend großen Abstand zur Trennwand aufweist, die die Durchbrechung begrenzt. Die Abschlussmembran des erfindungsgemäßen schaltbaren Hydrolagers kann dabei der Abschlussmembran eines nicht-schaltbaren Hydrolagers entsprechen; durch eine solche Vereinheitlichung können insgesamt Kosten gespart werden.

Nach einer anderen Ausgestaltung kann es vorgesehen sein, dass die Schaltmembran und die Abschlussmembran einstückig ineinander übergehend und materialeinheitlich ausgebildet sind. Dadurch ist die Anzahl der Einzelteile, aus denen das Hydrolager besteht, weiter reduziert. Der Zentralbereich der Schaltmembran ist ein einstückiger Bestandteil der Abschlussmembran. Einer mechanischen Verbindung zwischen der Schaltmembran und der Abschlussmembran bedarf es daher nicht.

Im nicht-differenzdruckbeaufschlagten Zustand der Schaltmembran kann die Durchbrechung durch den Verschlusskörper flüssigkeitsdicht verschlossen sein. Durch eine solche Ausgestaltung ergibt sich ein vorteilhaftes Fail-Safe-Verhalten.
Dazu wird Folgendes ausgeführt:
Die Durchbrechung in der Trennwand ist üblicherweise nur im Leerlauf einer auf dem Hydrolager abgestützten Verbrennungskraftmaschine offen. Die offene Durchbrechung bildet einen Tilgerkanal. Durch die offene Durchbrechung werden Leerlaufschwingen der Verbrennungskraftmaschine getilgt. Die in der Durchbrechung befindliche Dämpfungsflüssigkeit wird dazu zwischen dem Arbeitsraum dem Ausgleichsraum hin und her verlagert.
Oberhalb der Leerlaufdrehzahl der abgestützten Verbrennungskraftmaschine ist die Durchbrechung demgegenüber mittels der Schaltmembran flüssigkeitsdicht verschlossen. Die Funktion des erfindungsgemäßen schaltbaren Hydrolagers entspricht dann der Funktion eines nicht-schaltbaren Hydrolagers.
Im Fall einer Funktionsstörung der Stellvorrichtung ist es hinsichtlich eines sicheren Betriebsverhaltens des Hydrolagers von Vorteil, wenn sich das in seiner Funktion beeinträchtigte schaltbare Hydrolager genauso verhält, wie ein nicht-schaltbares Hydrolager. Das wird durch die beschriebene Ausgestaltung gewährleistet.

Die Durchbrechung kann zentral in der Trennwand angeordnet sein. Dadurch ist die Herstellung des Hydrolagers vereinfacht.

Die Durchbrechung kann, wie zuvor beschrieben, als Tilgerkanal zur Tilgung von Leerlaufschwingungen einer Verbrennungskraftmaschine ausgebildet sein. Oberhalb der Leerlaufdrehzahl ist die Durchbrechung durch den Verschlusskörper verschlossen und dadurch ohne Funktion.

Die Trennwand kann zur Dämpfung tieffrequenter, großamplitudiger Schwingungen einen Dämpfungskanal umfassen, der den Arbeitsraum und den Ausgleichsraum flüssigkeitsleitend miteinander verbindet. Tieffrequente, großamplitudige Schwingungen entstehen z. B., wenn ein Kraftfahrzeug, in dem die Verbrennungskraftmaschine auf dem Hydrolager gelagert ist, über Fahrbahnunebenheiten fährt. In einem solchen Fall wird Dämpfungsflüssigkeit vom Arbeitsraum durch den Dämpfungskanal in den Ausgleichraum und wieder zurück bewegt. Die Schwingungen der Verbrennungskraftmaschine in ihrer elastischen Lagerung werden dadurch gedämpft.

Der Dämpfungskanal kann die Trennwand im Bereich ihres Außenumfangs zumindest teilweise umschließen. In den meisten Anwendungsfällen ist von Vorteil, wenn der Dämpfungskanal möglichst lang ist, um die tieffrequenten, großamplitudigen Schwingungen möglichst effektiv dämpfen zu können.

Die Trennwand kann zur Isolierung höherfrequenter, kleinamplitudiger Schwingungen eine Membran umfassen, die schwingfähig zwischen dem Arbeitsraum und dem Ausgleichsraum angeordnet ist. Höherfrequente, kleinamplitudige Schwingungen werden z. B. durch Motorvibrationen oder kleine Unebenheiten auf der Fahrbahn angeregt, über die das Kraftfahrzeug bewegt wird. Durch die Schwingungen der Membran in der Trennwand werden diese höherfrequenten, kleinamplitudigen Schwingungen isoliert.

Die Membran besteht bevorzugt aus einem gummielastischen Werkstoff.

Die Trennwand kann einen Düsenkäfig umfassen, mit einer oberen Düsenscheibe und mit einer unteren Düsenscheibe, wobei zwischen den Düsenscheiben die Membran schwingfähig angeordnet ist. Abhängig von den jeweiligen Gegebenheiten des Anwendungsfalles kann die Membran als Lose zwischen den Düsenscheiben angeordnet sein oder im Bereich ihres Außenumfangs axial zwischen den Düsenscheiben eingespannt sein.

### Kurzbeschreibung der Zeichnung

Vier Ausführungsbeispiele eines erfindungsgemäßen Hydrolagers werden nachfolgend anhand der Figuren 1 bis 4 näher erläutert.

Diese zeigen jeweils in schematischer Darstellung:
- Fig. 1: ein erstes Ausführungsbeispiel des Hydrolagers, bei dem der Verschlusskörper durch die Abschlussmembran des Ausgleichsraums selbst gebildet ist und das als Schaltmembran ausgebildete Stellglied der Stellvorrichtung ungehaftet anliegend berührt,
- Fig. 2: ein zweites Ausführungsbeispiel, ähnlich dem Ausführungsbeispiel aus Fig. 1, wobei, abweichend davon, im Zentralbereich der Schaltmembran mehrere Ausnehmungen angeordnet sind,
- Fig. 3: ein drittes Ausführungsbeispiel, bei dem der Zentralbereich der Schaltmembran kraft- und/oder formschlüssig mit dem Verschlusskörper verbunden ist und
- Fig. 4: ein viertes Ausführungsbeispiel, bei dem die Schaltmembran und die Abschlussmembran einstückig ineinander übergehend und materialeinheitlich ausgebildet sind.

### Ausführung der Erfindung

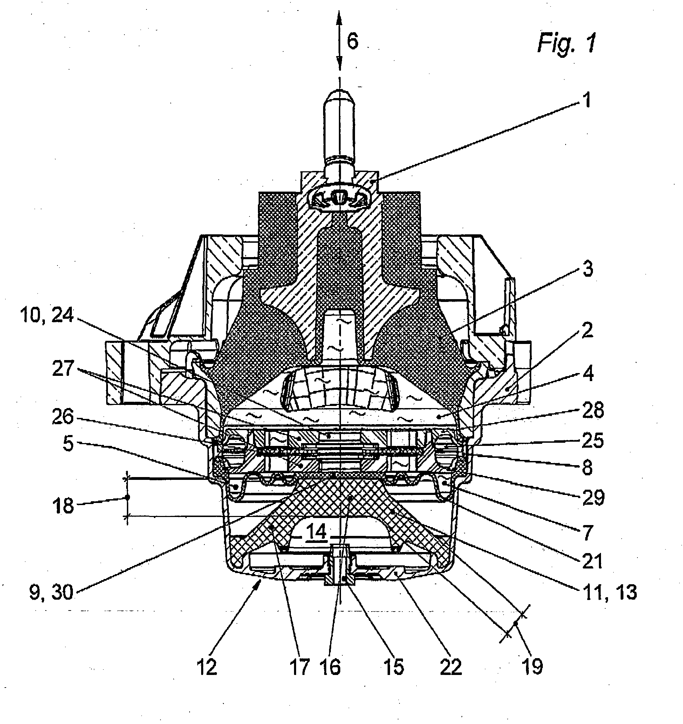

In den Figuren 1 bis 4 ist jeweils ein Ausführungsbeispiel eines erfindungsgemäßen, schaltbaren Hydrolagers gezeigt.
Die Hydrolager umfassen ein Traglager 1 und ein Auflager 2, die durch den Federkörper 3, der hohlkegelförmig ausgebildet ist und aus einem gummielastischen Werkstoff besteht, aufeinander abgestützt sind. Der Arbeitsraum 4 und der Ausgleichsraum 5 sind mit Dämpfungsflüssigkeit 7 gefüllt. In Richtung der betriebsbedingt eingeleiteten Schwingungen 6, axial zwischen dem Arbeitsraum 4 und dem Ausgleichsraum 5, ist die Trennwand 8 angeordnet, wobei die Trennwand 8 den Dämpfungskanal 25 umfasst, der die Trennwand 8 außenumfangsseitig umschließt und den Arbeitsraum 4 und den Arbeitsraum 5 flüssigkeitsleitend verbindet.
Außerdem umfasst die Trennwand 8 einen Düsenkäfig 27, der aus einer oberen Düsenscheibe 28 und einer unteren Düsenscheibe 29 besteht, wobei zwischen den beiden Düsenscheiben 28, 29 die Membran 26, die aus einem gummielastischen Werkstoff besteht, schwingfähig angeordnet ist.

Des Weiteren ist in der Trennwand 8 die Durchbrechung 10 angeordnet, die als Tilgerkanal ausgebildet und durch den Verschlusskörper 9 verschließbar ist. Angetrieben wird der Verschlusskörper 9 durch das Stellglied 11 der Stellvorrichtung 12, das den Verschlusskörper 9 bedarfsweise in Offen- oder Geschlossenstellung bringt.

Das Stellglied 11 ist durch eine hohlkegelförmig und einstückig ausgebildete Schaltmembran 13 aus gummielastischem Werkstoff gebildet. Die Stellvorrichtung 12 umfasst außerdem auf der der Trennwand 8 axial abgewandten Seite der Schaltmembran 13 eine Druckkammer 14 mit einem pneumatischen Anschluss 15 zur Betätigung der Schaltmembran 13 durch Differenzdruck.
In allen gezeigten Ausführungsbeispielen wird der Differenzdruck durch einen Unterdruck in der Druckkammer 14 erzeugt, wobei der Unterdruck gegen die Federkraft der Schaltmembran 13 wirkt.

Die einstückig ausgebildete und aus einem gummielastischen Werkstoff bestehende Schaltmembran 13 umfasst den Zentralbereich 16 und den kreisring- und hohlkegelförmigen Randbereich 17, der den Zentralbereich 16 radial außenumfangsseitig umschließt. Die Materialdicke 19 des Randbereichs 17 ist kleiner, als die Materialdicke 18 des Zentralbereichs 16. Die Materialdicke 18 des Zentralbereichs 16 ist dabei derart bemessen, dass Verformungen des Zentralbereichs 16 während der bestimmungsgemäßen Verwendung des Hydrolagers praktisch ausgeschlossen sind. Die Materialdicke 19 des Randbereichs 17 ist demgegenüber derart bemessen, dass die Kraft der Schaltmembran 13 ausreichend ist, um den Verschlusskörper 9 bei Nicht-Differenzdruckbeaufschlagung dichtend gegen die Trennwand 8 zu drücken, um die Durchbrechung 10 zu verschließen.

Das Auflager 2 und der Deckel 22 sind relativ ortsfest zueinander angeordnet, wobei im Deckel 22 der pneumatische Anschluss 15 angeordnet ist, um die Druckkammer 14 mit einem Unterdruck relativ zur Umgebung zu beaufschlagen.

Zur Funktion des Hydrolagers wird Folgendes ausgeführt:

Das Hydrolager kann beispielsweise zur Abstützung einer Verbrennungskraftmaschine in der Karosserie eines Kraftfahrzeugs Verwendung finden.
Läuft die Verbrennungskraftmaschine im Leerlauf, wird die Druckkammer 14 über den pneumatischen Anschluss 15 mit einem relativen Unterdruck beaufschlagt. Durch den Differenzdruck, der an der Schaltmembran 13 anliegt, wird die Schaltmembran 13 axial Richtung des Deckels 22 bewegt. Dadurch gibt der Verschlusskörper 9 die Durchbrechung 10 frei, die als Tilgerkanal 24 zur Tilgung von Leerlaufschwingungen der Verbrennungskraftmaschine ausgebildet ist.

Wird die Verbrennungskraftmaschine demgegenüber in einem Drehzahlbereich betrieben, der oberhalb der Leerlaufdrehzahl liegt, liegt an der Schaltmembran 13 kein Differenzdruck an; der Druck innerhalb der Druckkammer 14 entspricht dem Druck in der Umgebung.
Die Schaltmembran 13 bewegt sich mit ihrem Zentralbereich 16 axial in Richtung der Trennwand 8, wobei die Durchbrechung 10 durch den Verschlusskörper 9 verschlossen wird. Anschließend arbeitet das erfindungsgemäße Hydrolager wie ein nicht-schaltbares Hydrolager. Tieffrequente, großamplitudige Schwingungen, die beispielsweise beim Überfahren von Bordsteinkanten entstehen, werden dadurch gedämpft, dass die Dämpfungsflüssigkeit 7 vom Arbeitsraum 4 durch den Dämpfungskanal 25 in den Ausgleichraum 5 und anschließend wieder zurück gefördert wird. Die Abschlussmembran 21, die rollbalgförmig ausgebildet ist, aus einem gummielastischen Werkstoff besteht und in den hier gezeigten Ausführungsbeispielen ein Zentrum 30 aufweist, ist dabei drucklos volumenaufnehmend ausgebildet. Während der Dämpfung tieffrequenter, großamplitudiger Schwingungen ist die Membran 26 innerhalb des Düsenkäfigs 27 blockiert.

Sollen demgegenüber höherfrequente, kleinamplitudige Schwingungen isoliert werden, ist der Dämpfungskanal 25 hydraulisch blockiert. Zur Isolierung derartiger Schwingungen bewegt sich die Membran 26 zwischen der oberen 28 und unteren Düsenscheibe 29 des Düsenkäfigs 27 axial in Richtung der betriebsbedingt eingeleiteten Schwingungen 6 hin und her.

Alle Ausführungsbeispiele sind mit verschlossener Durchbrechung 10 dargestellt; die Verbrennungskraftmaschine, die auf den Hydrolagern gelagert ist, wird demnach oberhalb der Leerlaufdrehzahl betrieben.

In Fig. 1 ist ein erstes Ausführungsbeispiel des erfindungsgemäßen Hydrolagers gezeigt. Dir Schaltmembran 13 berührt mit ihrem Zentalbereich 16 das Zentrum 30 der Abschlussmembran 21 ungehaftet anliegend. Die Druckkammer 14 ist nicht mit Unterdruck beaufschlagt, so dass die Schaltmembran 13 die Abschlussmembran 21 dichtend gegen die Trennwand 8 drückt und dadurch die Durchbrechung 10 in der Trennwand 8 verschließt. Der Verschlusskörper 9 ist in diesem Ausführungsbeispiel durch das Zentrum 30 der Abschlussmembran 21 gebildet. Radial außenseitig an das Zentrum 30 der Abschlussmembran 21 schließt sich der rollbalgförmige Bereich an, der das Zentrum 30 aussenumfangsseitig umschließt und außenumfangsseitig dichtend im Deckel 22 des Auflagers 2 gehalten ist.

Im Leerlauf wird die Druckkammer 14 mit Unterdruck beaufschlagt und die Schaltmembran 13 wird dadurch axial in Richtung des Deckels 22 bewegt. Durch die statische Vorlast des Hydrolagers ergibt sich dadurch ein ausreichend großer Abstand des Verschlusskörpers 9 axial zur Trennwand 8, so dass die Durchbrechung 10 offen und der Arbeitsraum 4 und der Ausgleichsraum 5 dadurch strömungsleitend miteinander verbunden sind.

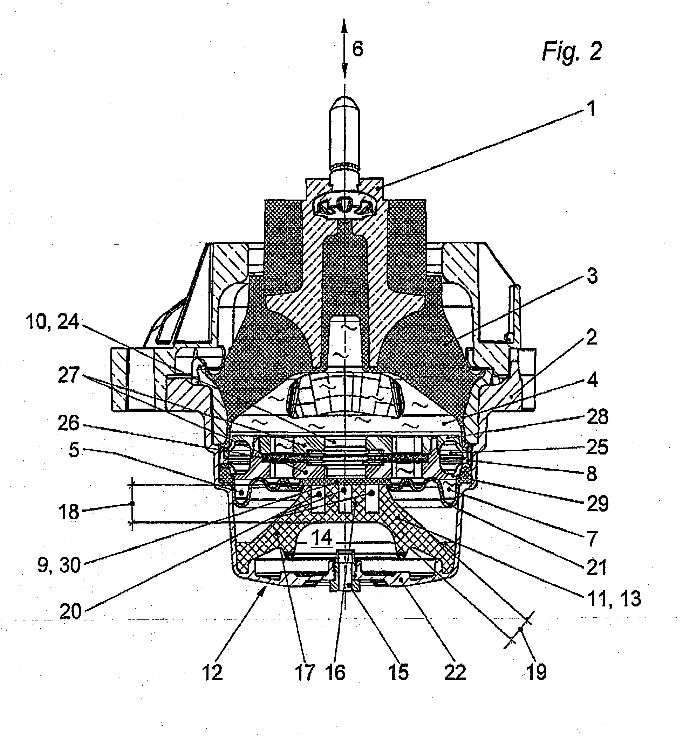

In Fig. 2 ist ein Ausführungsbeispiel gezeigt, ähnlich dem Ausführungsbeispiel aus Fig. 1.
Der Zentralbereich 16 der Schaltmembran 13 ist abweichend gestaltet und weist mehrere Ausnehmungen 20 auf, die im Zentralbereich 16 der Schaltmembran 13 angeordnet und axial in Richtung der Trennwand 8 offen sind. Dadurch ergibt sich ein besserer Wärmeeintrag bei der Vulkanisation der Schaltmembran 13 und ein geringeres Gewicht dieses Bauteils.

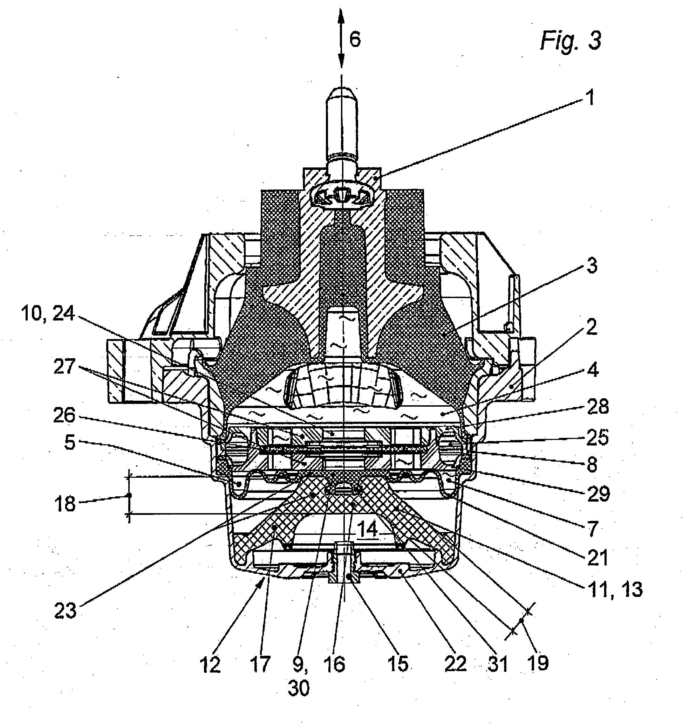

In Fig. 3 ist ein drittes Ausführungsbeispiel gezeigt, das sich vom ersten Ausführungsbeispiel gemäß Fig. 1 dadurch unterscheidet, dass das Zentrum 30 der Abschlussmembran 21 auf seiner der Trennwand 8 axial abgewandten Seite eine Haltekralle 31 aufweist, die in eine Ausnehmung 20 des Zentralbereichs 13 der Schaltmembran kraft- und/oder formschlüssig eingreift. Durch diese kraft- und/oder formschlüssige Verbindung des Zentrums 30 der Abschlussmembran 21 mit dem Zentralbereich 16 ergibt sich eine besonders exakte Öffnungscharakteristik der Stellvorrichtung 12. Die Bewegung der Schaltmembran 13 axial in Richtung des Deckels 22 bei Beaufschlagung der Druckkammer 14 mit Unterdruck wird unmittelbar auf das Zentrum 30 der Abschlussmembran 13 übertragen, die den Verschlusskörper 9 bildet.

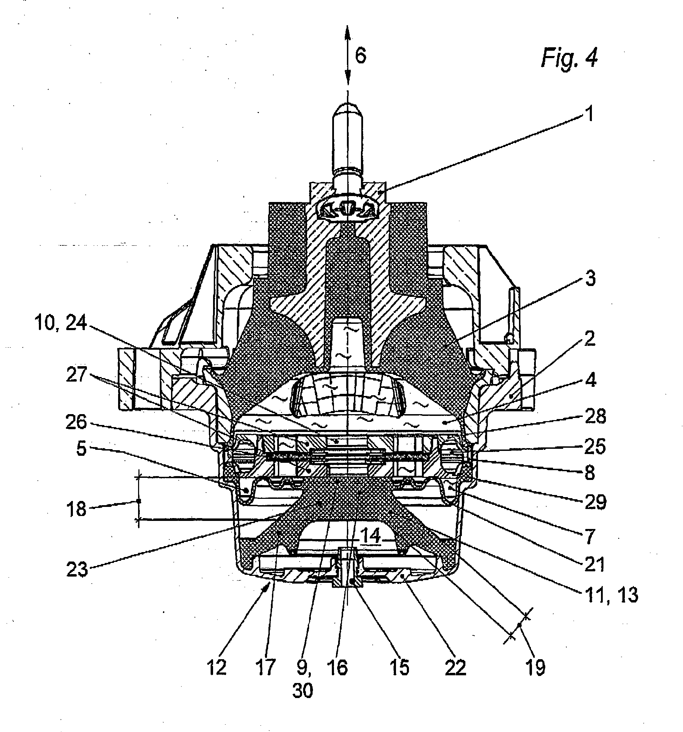

In Fig. 4 ist ein viertes Ausführungsbeispiel gezeigt, bei dem die Schaltmembran 13 und die Abschlussmembran 21 einstückig ineinander übergehend und materialeinheitlich ausgebildet sind. Ein solches Hydrolager weist einen besonders teilearmen und einfachen Aufbau auf. In diesem Ausführungsbeispiel wird der Verschlusskörper 9 durch die Schaltmembran 13 selbst, insbesondere durch deren Zentralbereich 16 gebildet, der die Durchbrechung 10 in der Trennwand 8 bedarfsweise öffnet oder verschließt. Der Verschlusskörper 9, die Schaltmembran 13 und die Abschlussmembran 21 sind hier einstückig ineinander übergehend und materialeinheitlich ausgebildet.

## Patentansprüche

1. Hydrolager, umfassend ein Traglager (1) und ein Auflager (2), die durch einen im Wesentlichen hohlkegelförmig ausgebildeten Federkörper (3) aus gummielastischem Werkstoff aufeinander abgestützt sind und einen Arbeitsraum (4) und einen Ausgleichsraum (5) begrenzen, die in Richtung der betriebsbedingt eingeleiteten Schwingungen (6) benachbart zueinander angeordnet sind, wobei der Arbeitsraum (4) und der Ausgleichsraum (5) mit Dämpfungsflüssigkeit (7) gefüllt und auf ihren einander axial zugewandten Seiten durch eine Trennwand (8) räumlich voneinander getrennt und flüssigkeitsleitend miteinander verbunden sind, wobei die Trennwand (8) eine durch einen Verschlusskörper (9) verschließbare Durchbrechung (10) aufweist, wobei der Verschlusskörper (9) durch ein Stellglied (11) einer Stellvorrichtung (12) bedarfsweise in Offen- oder Geschlossenstellung bringbar ist, wobeidas Stellglied (11) durch eine hohlkegelförmig und einstückig ausgebildete Schaltmembran (13) aus gummielastischem Werkstoff gebildet ist, wobei auf der der Trennwand (8) axial abgewandten Seite der Schaltmembran (13) eine Druckkammer (14) mit einem pneumatischen Anschluss (15) zur Betätigung der Schaltmembran (13) durch Differenzdruck angeordnet ist, wobei die Schaltmembran (13) einen der Trennwand (8) axial zugewandten ebenen Zentralbereich (16) aufweist, der von einem kreisring- und hohlkegelförmigen Randbereich (17) aussenumfangsseitig umschlossen ist und wobei der Randbereich (17) axial entgegen der Richtung der Trennwand (8) trichterförmig sich erweiternd ausgebildet ist, **dadurch gekennzeichnet, dass** der Randbereich (17) als Druckfeder wirkt und den Verschlusskörper (9) strömungsdicht an der Durchbrechung (10) hält.

2. Hydrolager nach Anspruch 1, **dadurch gekennzeichnet, dass** der Zentralbereich (16) eine größere Materialdicke (18, 19) als der Randbereich (17) aufweist.

3. Hydrolager nach einem der Ansprüche 1 oder 2, **dadurch gekennzeichnet, dass** der Zentralbereich (16) zumindest eine Ausnehmung (20) aufweist, die axial in Richtung der Trennwand (8) offen ist.

4. Hydrolager nach einem der Ansprüche 1 bis 3, **dadurch gekennzeichnet, dass** der Ausgleichsraum (5) auf der der Trennwand (8) axial abgewandten Seite durch eine rollbalgförmig ausgebildete, im Wesentlichen drucklos Volumen aufnehmende Abschlussmembran (21) begrenzt ist.

5. Hydrolager nach Anspruch 4, **dadurch gekennzeichnet, dass** die Abschlussmembran (21) aus einem gummielastischen Werkstoff besteht.

6. Hydrolager nach einem der Ansprüche 4 oder 5, **dadurch gekennzeichnet, dass** das Auflager (2) einen im Wesentlichen topfförmigen Deckel (22) umfasst, der auf der der Trennwand (8) axial abgewandten Seite der Abschlussmembran (21) angeordnet ist und die Druckkammer (14) auf der der Schaltmembran (13) axial abgewandten Seite begrenzt.

7. Hydrolager nach Anspruch 6, **dadurch gekennzeichnet, dass** der pneumatische Anschluss (15) im Deckel (22) angeordnet ist.

8. Hydrolager nach einem der Ansprüche 4 bis 7, **dadurch gekennzeichnet, dass** die Schaltmembran (13) und die Abschlussmembran (21) eine vormontierbare Einheit (23) bilden und kraft- und/oder formschlüssig oder stoffschlüssig miteinander verbunden sind.

9. Hydrolager nach einem der Ansprüche 4 bis 7, **dadurch gekennzeichnet, dass** sich die Schaltmembran (13) und die Abschlussmembran (21) auf ihren einander axial zugewandten Seiten nur bei verschlossener Durchbrechung (10) ungehaftet anliegend berühren.

10. Hydrolager nach einem der Ansprüche 4 bis 7, **dadurch gekennzeichnet, dass** die Schaltmembran (13) und die Abschlussmembran (21) einstückig ineinander übergehend und materialeinheitlich ausgebildet sind.

11. Hydrolager nach einem der Ansprüche 1 bis 10, **dadurch gekennzeichnet, dass** im nicht-differenzdruckbeaufschlagten Zustand der Schaltmembran (13) die Durchbrechung (10) durch den Verschlusskörper (9) flüssigkeitsdicht verschlossen ist.

12. Hydrolager nach einem der Ansprüche 1 bis 11, **dadurch gekennzeichnet, dass** die Durchbrechung (10) zentral in der Trennwand (8) angeordnet ist.

13. Hydrolager nach einem der Ansprüche 1 bis 12, **dadurch gekennzeichnet, dass** die Durchbrechung (10) als Tilgerkanal (24) zur Tilgung von Leerlaufschwingungen einer Verbrennungskraftmaschine ausgebildet ist.

14. Hydrolager nach einem der Ansprüche 1 bis 13, **dadurch gekennzeichnet, dass** die Trennwand (8) zur Dämpfung tieffrequenter, großamplitudiger Schwingungen einen Dämpfungskanal (25) umfasst, der den Arbeitsraum (4) und den Ausgleichsraum (5) flüssigkeitsleitend miteinander verbindet.

15. Hydrolager nach Anspruch 14, **dadurch gekennzeichnet, dass** der Dämpfungskanal (25) die Trennwand (8) im Bereich ihres Außenumfangs zumindest teilweise umschließt.

16. Hydrolager nach einem der Ansprüche 1 bis 15, **dadurch gekennzeichnet, dass** die Trennwand (8) zur Isolierung höherfrequenter, kleinamplitudiger Schwingungen eine Membran (26) umfasst, die schwingfähig zwischen dem Arbeitsraum (4) und dem Ausgleichsraum (5) angeordnet ist.

17. Hydrolager nach Anspruch 16, **dadurch gekennzeichnet, dass** die Membran (26) aus einem gummielastischen Werkstoff besteht.

18. Hydrolager nach einem der Ansprüche 1 bis 17, **dadurch gekennzeichnet, dass** die Trennwand (8) einen Düsenkäfig (27) umfasst, mit einer oberen Düsenscheibe (28) und mit einer unteren Düsenscheibe (29) und dass zwischen den Düsenscheiben (28, 29) die Membran (26) angeordnet ist.

## Claims

1. A hydromount, comprising a carrying mount (1) and a support mount (2), which are supported on each other by a spring body (3) of rubber-elastic material configured substantially in a hollow-cone shape and which delimit a working chamber (4) and an equalisation chamber (5) disposed adjacent to each other in the direction of the vibrations (6) introduced due to operation, wherein the working chamber (4) and the equalisation chamber (5) are filled with damping liquid (7) and, on their axially facing sides, are spatially separated from each other by a partition wall (8) and are connected to each other in a liquid-conducting manner, wherein the partition wall (8) has a through-hole (10) that can be closed by means of a closure body (9), wherein the closure body (9) can be brought into an open or closed position as needed by an actuating member (11) of an actuating device (12), wherein the actuating member (11) is formed by an switching membrane (13) of rubber-elastic material configured in a hollow-cone shape and integrally, wherein a pressure chamber (14) with a pneumatic connector (15) for actuating the switching membrane (13) by means of differential pressure is disposed on the side of the switching membrane (13) facing axially away from the partition wall (8), wherein the switching membrane (13) has a plane central region (16) which faces axially towards the partition wall (8) and which is enclosed on the side of the outer circumference by a circular-ring-shaped and hollow-cone-shaped peripheral region (17), and wherein the peripheral region (17) is formed so as to expand in a funnel shape axially in a direction opposite to the direction of the partition wall (8), **characterised in that** the peripheral region (17) acts as a compression spring and holds the closure body (9) on the through-hole (10) in a flow-tight manner.

2. The hydromount according to claim 1, **characterised in that** the central region (16) has a greater material thickness (18, 19) than the peripheral region (17).

3. The hydromount according to any one of the claims 1 or 2, **characterised in that** the central region (16) has at least one recess (20) that is axially open in the direction of the partition wall (8).

4. The hydromount according to any one of the claims 1 to 3, **characterised in that** the equalisation chamber (5) is delimited on the side facing axially away from the partition wall (8) by a closure membrane (21) which is configured in the shape of a rolling bellows and accommodates volume in a substantially pressureless manner.

5. The hydromount according to claim 4, **characterised in that** the closure membrane (21) is made of a rubber-elastic material.

6. The hydromount according to any one of the claims 4 or 5, **characterised in that** the support mount (2) comprises a substantially pot-shaped lid (22), which is disposed on the side of the closure membrane (21) faxing axially away from the partition wall (8) and delimits the pressure chamber (14) on the side faxing axially away from the switching membrane (13).

7. The hydromount according to claim 6, **characterised in that** the pneumatic connector (15) is disposed in the lid (22).

8. The hydromount according to any one of the claims 4 to 7, **characterised in that** the switching membrane (13) and the closure membrane (21) form a unit (23) that can be pre-assembled and are connected to each other frictionally and/or positively or by substance-to-substance connection.

9. The hydromount according to any one of the claims 4 to 7, **characterised in that** the switching membrane (13) and the closure membrane (21) contact each other on their axially facing sides in a non-adhering, abutting way only if the through-hole (10) is closed off.

10. The hydromount according to any one of the claims 4 to 7, **characterised in that** the switching membrane (13) and the closure membrane (21) are configured so as to integrally merge into each other and be made of the same material.

11. The hydromount according to any one of the claims 1 to 10, **characterised in that** in the non-differentially-pressurized state of the switching membrane (13) the through-hole (10) is sealed in a liquid-tight manner by the closure body (9).

12. The hydromount according to any one of the claims 1 to 11, **characterised in that** the through-hole (10) is disposed centrally in the partition wall (8).

13. The hydromount according to any one of the claims 1 to 12, **characterised in that** the through-hole (10) is configured as an absorber channel (24) for absorbing idling vibrations of an internal combustion engine.

14. The hydromount according to any one of the claims 1 to 13, **characterised in that** the partition wall (8), for damping low-frequency, large-amplitude vibrations, comprises a damping channel (25) that connects the working chamber (4) and the equalisation chamber (5) in a liquid-conducting manner.

15. The hydromount according to claim 14, **characterised in that** the damping channel (25) encloses the partition wall (8) at least partially in the region of the outer circumference thereof.

16. The hydromount according to any one of the claims 1 to 15, **characterised in that** the partition wall (8), in order to insulate higher-frequency, small-amplitude vibrations, comprises a membrane (26) that is disposed between the working chamber (4) and the equalisation chamber (5) in a manner capable of vibrating.

17. The hydromount according to claim 16, **characterised in that** the membrane (26) is made of a rubber-elastic material.

18. The hydromount according to any one of the claims 1 to 17, **characterised in that** the partition wall (8) comprises an nozzle cage (27) with an upper nozzle disc (28) and a lower nozzle disc (29), and that the membrane (26) is disposed between the nozzle discs (28, 29).

## Revendications

1. Support hydraulique, comprenant un bloc-support (1) et un élément en appui (2), qui sont soutenus l'un sur l'autre par un corps de ressort (3), réalisé sensiblement en forme de cône creux en un matériau présentant l'élasticité du caoutchouc, et comprenant une chambre de travail (4) et une chambre d'égalisation (5), qui sont agencées au voisinage l'une de l'autre en direction des oscillations (6) appliquées en fonctionnement, dans lequel la chambre de travail (4) et la chambre d'égalisation (5) sont remplies d'un liquide d'amortissement (7) et sont séparées l'une de l'autre dans l'espace par une cloison de séparation (8) sur leurs côtés tournés axialement l'un vers l'autre, dans lequel la cloison de séparation (8) comporte une traversée (10) susceptible d'être obturée par un corps d'obturateur (9), dans lequel le corps d'obturateur (9) est susceptible d'être amené par un organe de positionnement (11) d'un dispositif de positionnement (12) selon les besoins en position ouverte ou en position fermée, dans lequel l'organe de positionnement (11) est formé par une membrane de commutation (13) en un matériau présentant l'élasticité du caoutchouc, réalisée en forme de cône creux et d'une seule pièce, dans lequel une chambre à pression (14) avec un raccord pneumatique (15) pour actionner la membrane de commutation (13) par une pression différentielle est agencée sur le côté de la membrane de commutation (13) axialement détourné de la cloison de séparation (8), dans lequel la membrane de commutation (13) comporte une zone centrale plane (16) axialement tournée vers la cloison de séparation (8) est entourée du côté de sa périphérie extérieure par une zone de bordure (17) en forme d'anneau circulaire ou en forme de cône creux, et dans lequel la zone de bordure (17) est réalisée de manière à s'élargir en forme d'entonnoir axialement en sens opposé à la direction de la cloison de séparation (8),
**caractérisé en ce que** la zone de bordure (17) fait l'effet d'un ressort de compression et maintient le corps d'obturateur (9) de manière étanche vis-à-vis de l'écoulement contre la traversée (10).

2. Support hydraulique selon la revendication 1, **caractérisé en ce que** la zone centrale (16) présente une épaisseur de matériau (18, 19) plus élevée que la zone de bordure (17).

3. Support hydraulique selon l'une des revendications 1 ou 2, **caractérisé en ce que** la zone centrale (16) comporte au moins un évidement (20), qui est ouvert axialement en direction de la cloison de séparation (8).

4. Support hydraulique selon l'une des revendications 1 à 3, **caractérisé en ce que** la chambre d'égalisation (5) est délimitée, sur le côté axialement détourné de la cloison de séparation (8), par une membrane de terminaison (21) réalisée à la manière d'un soufflet déroulant et enfermant un volume sensiblement sans pression.

5. Support hydraulique selon la revendication 4, **caractérisé en ce que** la membrane de terminaison (21) est en un matériau présentant l'élasticité du caoutchouc.

6. Support hydraulique selon l'une des revendications 4 ou 5, **caractérisé en ce que** l'élément en appui (2) comprend un couvercle (22) sensiblement en forme de godet, qui est agencé sur le côté de la membrane de terminaison (21) axialement détourné de la cloison de séparation (8), et qui délimite la chambre à pression (14) sur le côté axialement détourné de la membrane de commutation (13).

7. Support hydraulique selon la revendication 6, **caractérisé en ce que** le raccord pneumatique (15) est agencé dans le couvercle (22).

8. Support hydraulique selon l'une des revendications 4 à 7, **caractérisé en ce que** la membrane de commutation (13) et la membrane de terminaison (21) forment une unité (23) capable d'être prémontée, et sont reliées l'une à l'autre par coopération de formes ou par coopération de matières.

9. Support hydraulique selon l'une des revendications 4 à 7, **caractérisé en ce que** la membrane de commutation (13) et la membrane de terminaison (21) se touchent avec un contact sans adhérence, sur leurs côtés axialement tournés vers l'un vers l'autre, uniquement lorsque la traversée est fermée (10).

10. Support hydraulique selon l'une des revendications 4 à 7, **caractérisé en ce que** la membrane de commutation (13) et la membrane de terminaison (21) sont réalisées en un matériau unitaire et de manière à se transformer d'une seule pièce l'une dans l'autre.

11. Support hydraulique selon l'une des revendications 1 à 10, **caractérisé en ce que**, dans l'état de la membrane de commutation (13) non sollicité par une pression différentielle, la traversée (10) est obturée de manière étanche vis-à-vis des liquides par le corps obturateur (9).

12. Support hydraulique selon l'une des revendications 1 à 11, **caractérisé en ce que** la traversée (10) est agencée de manière centrale dans la cloison de séparation (8).

13. Support hydraulique selon l'une des revendications 1 à 12, **caractérisé en ce que** la traversée (10) est réalisée à titre de canal de compensation (24), pour compenser des oscillations de ralenti d'un moteur à combustion interne.

14. Support hydraulique selon l'une des revendications 1 à 13, **caractérisé en ce que** la cloison de séparation (8) comprend un canal d'amortissement (25) pour l'amortissement d'oscillations à basse fréquence et à forte amplitude, qui relie l'une à l'autre la chambre de travail (4) et la chambre d'égalisation (5) de manière à laisser passer les liquides.

15. Support hydraulique selon la revendication 14, **caractérisé en ce que** le canal d'amortissement (25) entoure au moins partiellement la cloison de séparation (8) dans la région de sa périphérie extérieure.

16. Support hydraulique selon l'une des revendications 1 à 15, **caractérisé en ce que** la cloison de séparation (8) inclut, pour l'isolation d'oscillations à haute fréquence et à faible amplitude, une membrane (26) qui est agencée entre la chambre de travail (4) et la chambre d'égalisation (5) de manière à pouvoir osciller.

17. Support hydraulique selon la revendication 16, **caractérisé en ce que** la membrane (26) est en un matériau présentant l'élasticité du caoutchouc.

18. Support hydraulique selon l'une des revendications 1 à 17, **caractérisé en ce que** la cloison de séparation (8) inclut une cage à buses (27), avec une plaque à buses supérieure (28) et avec une plaque à buses inférieure (29), et **en ce que** la membrane (26) est agencée entre les plaques à buses (28, 29).
